# EUROPÄISCHE PATENTANMELDUNG

(11) **EP 2 826 676 A1**
(43) Veröffentlichungstag der Anmeldung: **21.01.2015**
(21) Anmeldenummer: 14169044.6
(22) Anmeldetag: 20.05.2014
(51) Int. Cl.: B60R 21/38

(54) **Fronthaubenscharnierflügel für ein Fahrzeugfronthaubenscharnier**

(71) Anmelder: Metalsa Automotive GmbH, 51702 Bergneustadt (DE)
(72) Erfinder: Kern, Alexander, 51597 Morsbach (DE)
(74) Vertreter: Kalkoff & Partner

(57) **Zusammenfassung**

Die Erfindung betrifft einen Fronthaubenscharnierflügel für ein Fahrzeugfronthaubenscharnier, mit einem gelenkig mit einem Unterteil des Fahrzeugfronthaubenscharniers verbundenen Grundkörper, einem mit einer Fronthaube oder einer Fahrzeugkarosserie verbindbaren und gegenüber dem Grundkörper zwischen einer Normallage und einer Crashlage verschwenkbaren Anschlusselement, einem das Anschlusselement und den Grundkörper gelenkig verbindenden Scharnierstift und einer einen pyrotechnischen Gasgenerator aufweisenden Antriebsvorrichtung, die derart ausgebildet und angeordnet ist, dass eine Aktivierung des Gasgenerators eine Verlagerung des Anschlusselements aus der Normallage in die Crashlage bewirkt. Um einen Fronthaubenscharnierflügel für ein Fronthaubenscharnier der eingangs genannten Art bereitzustellen, das sich besonders kostengünstig herstellen lässt und eine kompakte Bauform aufweist, ist vorgesehen, dass der Gasgenerator ortsfest an einem mit dem Anschlusselement verbundenen Gehäuse befestigt ist und derart mit einem verdrehfest an dem Scharnierstift angeordneten Antriebskörper der Antriebsvorrichtung in Wirkverbindung befindlich ist, dass der bei einer Aktivierung des Gasgenerators auftretende Gasdruck eine Verlagerung des Gehäuses relativ zum Antriebskörper bewirkt.

## Beschreibung

Die Erfindung betrifft einen Fronthaubenscharnierflügel für ein Fahrzeugfronthaubenscharnier, mit
- einem gelenkig mit einem Unterteil des Fahrzeugfronthaubenscharniers verbundenen Grundkörper,
- einem mit einer Fronthaube oder einer Fahrzeugkarosserie verbindbaren und gegenüber dem Grundkörper zwischen einer Normallage und einer Crashlage verschwenkbaren Anschlusselement,
- einem das Anschlusselement und den Grundkörper gelenkig verbindenden Scharnierstift und
- einer einen pyrotechnischen Gasgenerator aufweisenden Antriebsvorrichtung, die derart ausgebildet und angeordnet ist, dass eine Aktivierung des Gasgenerators eine Verlagerung des Anschlusselements aus der Normallage in die Crashlage bewirkt.

Aus einem Fronthaubenscharnierflügel und einem gelenkig mit dem Fronthaubenscharnierflügel verbundenen Fronthaubenscharnierunterteil gebildete Fahrzeugfronthaubenscharniere sind bereits in vielfältigen Ausgestaltungen aus dem Stand der Technik bekannt. Ihre primäre Funktion besteht üblicherweise darin, eine Fahrzeugfronthaube, bspw. einer Motorhaube schwenkbar an einer Fahrzeugkarosserie anzuordnen, so dass diese dann zwischen einer Schließposition, in der die Haube - in der Regel gesichert durch ein Haubenschloss - einen Motorraum überdeckt, und einer Öffnungsposition, welche den Zugang zu einem unter der Fronthaube angeordneten Motorraum ermöglicht, verstellt werden kann. Hierzu wird der Fronthaubenscharnierflügel an der Fronthaube oder der Fahrzeugkarosserie und das Fronthaubenscharnierunterteil entsprechend der Anordnung des Fronthaubenscharniersflügels an dem anderen Bauteil von Fahrzeugkarosserie und Fronthaube befestigt.

Zur Verringerung der Schwere von Personenschäden bei Unfällen, bei denen die Personen mit der Fronthaube des Fahrzeugs in Kontakt kommen, werden zunehmend höhere Anforderungen an die Fahrzeughersteller gestellt, um den Fußgängerschutz zu verbessern. Eine wesentliche Anforderung besteht dabei in der Einhaltung vorgeschriebener HIC-Werte (Kopfaufprall auf der Fronthaube). Zur Erreichung der Vorgaben werden dabei bspw. für den Fall, dass zwischen einer Fronthaubenunterseite und den darunter angeordneten Fahrzeugkomponenten, bspw. einem Motorblock, nicht genügend Raum zur Energieabsorbierung beim Aufprall auf die Fronthaube durch deren Deformation zur Verfügung steht, vermehrt sogar aktive Systeme eingesetzt, bei denen die Fronthaube im Falle eines Unfalles mittels einer Antriebsvorrichtung aufgestellt wird, um so unterhalb der Fronthaube einen geeignet großen Verformungsraum bereitzustellen.

Bekannte Systeme, die eine Aufstellung der Fronthaube bewirken, weisen in der Regel einen sehr komplexen Aufbau auf und müssen mit ebenfalls komplex aufgebauten Antriebsvorrichtungen kombiniert werden, um im Crashfall in kürzester Zeit eine Verlagerung der Fronthaube in ihre Crashlage zu gewährleisten, bevor es zum Personenaufprall auf die Fronthaube kommt. Die bekannte Verwendung pyrotechnischer Gasgeneratoren erfolgt in der Regel derart, dass die Verlagerung aufgrund einer linearen Verstellung eines durch den Gasgenerator angetriebenen Hubkolbens erfolgt, was folglich einen großen Bauraum für die Antriebsvorrichtung erforderlich macht, um die notwendigen Verstellwege der Fronthaube zu erreichen.

Der Erfindung liegt die Aufgabe zugrunde, ein Fronthaubenscharnierflügel für ein Fronthaubenscharnier der eingangs genannten Art bereitzustellen, das sich besonders kostengünstig herstellen lässt und eine kompakte Bauform aufweist.

Die Erfindung löst die Aufgabe durch ein Fronthaubenscharnierflügel mit den Merkmalen des Anspruchs 1. Vorteilhafte Weiterbildungen der Erfindung sind in den abhängigen Ansprüchen angegeben.

Wesentlich für den erfindungsgemäßen Fronthaubenscharnierflügel, welcher grundsätzlich in bekannter Weise gelenkig mit einem zur Verbindung mit der Fahrzeugkarosserie oder Fronthaube vorgesehenen Fronthaubenscharnierunterteil verbunden werden kann, ist, dass der Gasgenerator ortsfest an einem mit dem Anschlusselement verbundenen Gehäuse befestigt ist und derart mit einem verdrehfest an dem Scharnierstift angeordneten Antriebskörper der Antriebsvorrichtung in Wirkverbindung befindlich ist, dass der bei einer Aktivierung des Gasgenerators auftretende Gasdruck eine Verlagerung des Gehäuses relativ zum Antriebskörper bewirkt. Von Vorteil ist dabei, dass sich der Gasgenerator nicht direkt an der Karosserie, sondern an einem Scharnierbauteil abstützt.

Das Anschlusselement kann wahlweise an der Fahrzeugkarosserie oder Fronthaube angeordnet werden, wobei das Unterteil des Fahrzeugfronthaubenscharniers an dem jeweils anderen Bauteil angeordnet ist. Bevorzugt ist eine Anordnung, bei der das Anschlusselement als Klappenteil mit der Fronthaube verbunden wird und das Unterteil dann zur Verbindung mit der Fahrzeugkarosserie dient.

Die verdrehfeste Verbindung des Antriebskörpers mit dem das Anschlusselement und den Grundkörper gelenkig verbindenden Scharnierstift erlaubt es aufgrund des unmittelbar auf den Antriebskörper wirkenden Gasdrucks, auf weitere Antriebsmittel zur Umwandlung der bei einer Aktivierung des Gasgenerators entstehenden Antriebsenergie zu verzichten. Eine Aktivierung des Gasgenerators bewirkt unmittelbar eine Verlagerung des Anschlusselements aus dessen Normallage in die Crashlage, nachdem der Gasgenerator über das Gehäuse an dem Anschlusselement abgestützt ist. Insofern erfolgt im Falle einer Aktivierung des Gasgenerators eine Verlagerung des Antriebskörpers relativ gegenüber dem Anschlusselement bzw. der Antriebskörper wird gegenüber dem Anschlusselement verstellt.

Die ortsfeste Verbindung des Gehäuses, an welchem der Gasgenerator lagesicher befestigt ist, sowie des Antriebskörpers auf dem Scharnierstift, bewirkt eine zuverlässige Abstützung dieser beiden Bauteile gegeneinander. Aufgrund der gelenkigen Verbindung des Anschlusselements und des Grundkörpers über den Scharnierstift wird somit im Falle einer Aktivierung des Gasgenerators eine zuverlässige Verlagerung des Anschlusselements in die Crashlage erreicht. Bei einer Aktivierung des Gasgenerators wirkt dabei der auftretende Gasdruck auf den Antriebskörper, der dann gegenüber dem Gehäuse in einer vorbestimmten Weise verstellt wird.

Die Anbindung der Antriebsvorrichtung an den Fronthaubenscharnierflügel weist gegenüber karosseriefest angeordneten Gasgeneratoren ferner den Vorteil auf, dass die durch die Antriebsvorrichtung gegeneinander verstellbaren Grundkörper und Anschlusselemente eine gewisse Elastizität aufweisen und somit eine systembedingte Dämpfung der Verstellbewegung erfolgt. Dies hat wiederum geringere Spitzenbelastungen an den angrenzenden Bauteilen sowie geringere Schwingungsamplituden der Fronthaube zur Folge, was den Verzicht auf ein die Verstellbewegung dämpfendes Dämpfungselement ermöglicht.

Zur Umwandlung des bei der Aktivierung des pyrotechnischen Gasgenerators erzeugten Gasdrucks in eine Verlagerungsbewegung des Anschlusselements kann der Antriebskörper grundsätzlich in beliebiger Weise ausgestaltet und in dem ebenfalls frei ausgestaltbaren, an dem an den Antriebskörper angepassten Gehäuse angeordnet sein. Nach einer vorteilhaften Weiterbildung der Erfindung ist jedoch vorgesehen, dass der Antriebskörper durch einen Schwenkhebel gebildet ist, der im Bereich eines Druckraums des Gehäuses abdichtend an einer Gehäuseinnenwand anliegt, wobei der Schwenkhebel relativ gegenüber dem Gehäuse zwischen einer Ausgangslage und einer Endlage verstellbar ist.

Gemäß dieser Ausgestaltung der Erfindung ist der Schwenkhebel verstellbar innerhalb eines Druckraums des Gehäuses verdrehfest auf dem Scharnierstift angeordnet. Eine Aktivierung des Gasgenerators bewirkt eine Erhöhung des Drucks innerhalb des Druckraums des Gehäuses, in dem der Schwenkhebel abdichtend an der Gehäuseinnenwand anliegt. Eine Druckerhöhung innerhalb des Druckraums bewirkt dann eine Verstellung des Schwenkhebels aus seiner Ausgangslage in die Endlage, wobei sich das Anschlusselement in der Ausgangslage des Schwenkhebels in der Normallage und in der Endlage des Schwenkhebels in der Crashlage befindet. Die abdichtende Anordnung des Schwenkhebels an der Gehäuseinnenwand bewirkt dabei eine zuverlässige Verlagerung des Schwenkhebels relativ gegenüber dem Gehäuse und damit eine zuverlässige Aufstellung des Anschlusselements gegenüber dem Grundkörper, so dass ein mit dem Fronthaubenscharnierflügel ausgestattetes Fahrzeugfronthaubenscharnier zuverlässig in eine Crashlage überführt wird.

Die Verwendung eines auf dem Scharnierstift verdrehfest angeordneten Schwenkhebels zeichnet sich dabei dadurch aus, dass dieser in besonders einfacher Weise eine Umwandlung des Gasdrucks in eine mechanisch nutzbare Schwenkbewegung des Anschlusselements ermöglicht. Die Umwandlung erfolgt besonders einfach und kostengünstig, ohne dass auf zusätzlich mechanische Umlenkungsmittel zurückgegriffen werden muss. Über die Festlegung der Ausgangslage und Endlage des Schwenkhebels lässt sich dabei in besonders einfacher Weise die Crashlage des Fronthaubenscharnierflügels festlegen. Ein mit dem Fronthaubenscharnierflügel ausgestattetes Fahrzeugfronthaubenscharnier lässt sich so einfach an die fahrzeugherstellerseitig geforderten Anforderungen anpassen.

Im Normalbetrieb eines mit dem erfindungsgemäßen Fronthaubenscharnierflügel ausgestatteten Fahrzeugfronthaubenscharnier befindet sich der Fronthaubenscharnierflügel dauerhaft und zuverlässig in der Normallage, so dass das Fahrzeugfronthaubenscharnier störungsfrei dazu genutzt werden kann, um eine Fahrzeugfronthaube im Bedarfsfall zwischen einer Schließposition und einer Öffnungsposition zu verstellen. Der Fronthaubenscharnierflügel kann dabei grundsätzlich im Bereich der Antriebsvorrichtung bereits derart ausgestaltet sein, dass es ohne weitere Sicherungsmittel in der Normallage verbleibt.

Nach einer besonders vorteilhaften Ausgestaltung der Erfindung ist jedoch zur ergänzenden Sicherung der Normallage des Fronthaubenscharnierflügels vorgesehen, dass die Antriebsvorrichtung einen in der Normallage das Anschlusselement an dem Grundkörper festlegendes, zwischen einer Arretierungsstellung und einer Freigabestellung verlagerbares Arretierungselement aufweist. Die Verwendung eines Arretierungselements gemäß dieser Weiterbildung der Erfindung gewährleistet aufgrund der mechanischen Wirkung des Arretierungselements besonders zuverlässig, dass der Fronthaubenscharnierflügel dauerhaft in der Normallage verbleibt und erst bei einer Aktivierung der Antriebsvorrichtung eine Verstellung in die Crashlage erfolgt.

Hierzu ist das Arretierungselement zwischen der Arretierungsstellung und einer Freigabestellung verlagerbar, wobei in der Freigabestellung eine freie Verlagerung des Anschlusselements gegenüber dem Grundkörper aus der Normallage in die Crashlage erfolgen kann. Nach einer besonders vorteilhaften Ausgestaltung ist dabei vorgesehen, dass das Arretierungselement in Richtung auf die Arretierungsstellung vorgespannt ist, so dass eine besonders zuverlässige Lagesicherung des Anschlusselements gegenüber dem Grundkörper in der Normallage für den Fall gewährleistet ist, dass keine Aktivierung der Antriebsvorrichtung erfolgt. Die Vorspannung kann dabei grundsätzlich in beliebiger Weise durch geeignete Vorspannelemente, bspw. Federelemente, erreicht werden, die eine gewünschte Vorspannung bewirken.

Nach einer besonders vorteilhaften Ausgestaltung der Erfindung ist vorgesehen, dass das grundsätzlich beliebig ausgestaltbare Arretierungselement durch einen verschieblich am Gehäuse der Antriebsvorrichtung gelagerten, in der Normallage in den Grundkörper eingreifenden Verriegelungsbolzen gebildet ist. Dem gemäß kann das Arretierungselement gegenüber dem Grundkörper zwischen einer Eingriffsposition, in der der Verriegelungsbolzen eine Verlagerung des Anschlusselements gegenüber dem Grundkörper blockiert, und einer Freigabeposition, in der der Verriegelungsbolzen mit dem Grundkörper außer Eingriff gelangt, verstellt werden. Die lösbare Festlegung des Anschlusselements an dem Grundkörper resultiert dabei aus der verschieblichen Lagerung des Verriegelungsbolzens an dem Gehäuse, welches seinerseits ortsfest an dem Anschlusselement befestigt ist.

Die Ausgestaltung des Arretierungselements als einfacher Verriegelungsbolzen lässt sich dabei besonders einfach und kostengünstig herstellen, wobei auch eine Vorspannung des Verriegelungsbolzens in Richtung auf die Arretierungsstellung besonders einfach, bspw. durch ein einenends an dem Verriegelungsbolzen und anderenends an dem Gehäuse abgestütztes Federelement realisierbar ist.

Die Ausgestaltung der Verlagerung des Arretierungselements aus der Arretierungsstellung in die Freigabestellung, insbesondere im Falle der Ausgestaltung des Arretierungselements als Verriegelungsbolzen, ist grundsätzlich frei wählbar. So könnten zur Verlagerung bspw. separate Antriebseinrichtungen verwendet werden, welche ausgelöst durch ein geeignetes Sensorsignal, das einen androhenden Personenunfall anzeigt, eine Verlagerung des Arretierungselements bewirken. Auch besteht die Möglichkeit, das Arretierungselement derart in dem Gehäuse anzuordnen, dass dieses bei einer Aktivierung des Gasgenerators derart mit dem auftretenden Gasdruck beaufschlagt wird, dass das Arretierungselement unmittelbar aufgrund des auf diesen wirkenden Gasdrucks verstellt wird.

Nach einer besonders vorteilhaften Ausgestaltung der Erfindung ist jedoch vorgesehen, dass die Antriebsvorrichtung ein Betätigungselement zur Verlagerung des Arretierungselements in die Freigabestellung aufweist, wobei das Betätigungselement derart ausgebildet ist, dass der bei einer Aktivierung des Gasgenerators auftretende Gasdruck eine das Arretierungselement in die Freigabestellung bewegende Verstellung des Betätigungselements bewirkt. Gemäß dieser Ausgestaltung ist ein separates Betätigungselement vorgesehen, welches mit dem Arretierungselement in Wirkverbindung befindlich ist. Eine Aktivierung des Gasgenerators bewirkt aufgrund des auftretenden Gasdrucks eine Verstellung des Betätigungselements, wobei die Verstellbewegung auf das Arretierungselement übertragen wirkt, so dass dieses dann in die Freigabestellung gelangt. Die Verwendung eines separaten Betätigungselements zeichnet sich dabei dadurch aus, dass dieses in einfacher Weise ohne Berücksichtung weiterer zu erfüllender Funktionen derart ausgebildet werden kann, dass im Falle des anliegenden Gasdrucks eine ausreichende Verstellbewegung bewirkt wird, die zu einer Verlagerung des Arretierungselements führt.

Nach einer besonders vorteilhaften Ausgestaltung ist dabei vorgesehen, dass das Betätigungselement eine Kolben-Zylinder-Einheit aufweist, die derart ausgebildet und mit dem Arretierungselement in Wirkverbindung befindlich ist, dass der bei einer Aktivierung des Gasgenerators auftretende Gasdruck eine Verlagerung des Kolbens relativ gegenüber dem Zylinder und damit eine Verlagerung des Arretierungselements in die Freigabestellung bewirkt. Die Kolben-Zylinder-Einheit zeichnet sich dabei dadurch aus, dass aufgrund des zwischen diesen bestehenden Hohlraums eine einfache Nutzung des auftretenden Gasdrucks zur Verlagerung des Kolbens erfolgen kann. Die Kolben-Zylinder-Einheit ist hierbei derart ausgebildet, dass der Gasdruck in einen Hohlraum zwischen dem Kolben und dem Zylinder gelangt, wodurch eine Verlagerung des Kolbens relativ gegenüber dem Zylinder in einfacher Weise erreicht werden kann. Aufgrund der mit dem Arretierungselement bestehenden Wirkverbindung erfolgt dann in besonders zuverlässiger Weise eine Verlagerung des Arretierungselements in die Freigabestellung. Die Verlagerungsbewegung des Kolbens gegenüber dem Zylinder kann bspw. dazu genutzt werden, um einen mit dem Arretierungselement, bspw. Verriegelungsbolzen, verbundenen Hebel zu verlagern, so dass der Verriegelungsbolzen bspw. aus einer Eingriffsstellung mit dem Grundkörper herausgezogen wird.

Nach einer weiteren Ausgestaltung der Erfindung ist vorgesehen, dass die Kolben-Zylinder-Einheit einenends an einer mit dem Verriegelungsbolzen verbundenen Entriegelungsspange und anderenends an einer Rastspange anliegt, die zwischen einer Nicht-Eingriffsstellung und einer das Anschlusselement in der Crashlage an dem Grundkörper festlegenden Sperrstellung verstellbar ist. Gemäß dieser Ausgestaltung der Erfindung wirkt die Kolben-Zylinder-Einheit im Falle einer Aktivierung des Gasgenerators und einer damit einhergehenden Verstellung des Kolbens gegenüber dem Zylinder aufgrund des auftretenden Gasdrucks in zweierlei Weise.

Einenends wirkt die Kolben-Zylinder-Einheit auf eine Entriegelungsspange, die mit dem Verriegelungsbolzen derart verbunden ist, dass eine Verlagerung der Entriegelungsspange eine Verlagerung des Verriegelungsbolzens aus der Sperrstellung in die Freigabestellung bewirkt, wobei besonders bevorzugt der Verriegelungsbolzen aus einer Eingriffsstellung mit dem Grundkörper herausgezogen wird.

Anderenends bewirkt die Aktivierung der Kolben-Zylinder-Einheit aufgrund der Anlage des Kolbens an der Rastspange eine Verlagerung dieser Rastspange aus ihrer Nicht-Eingriffsstellung in eine Sperrstellung, in der die Rastspange das Anschlusselement gegenüber dem Grundkörper in der Crashlage arretiert. Durch diese Ausgestaltung der Erfindung ist gewährleistet, dass ein mit dem Fronthaubenscharnierflügel ausgestattetes Fronthaubenscharnier zuverlässig in der Crashlage verbleibt, so dass zum Energieabbau ein ausreichender Verformungsraum zur Verfügung steht. Einer ungewollten Rückverlagerung des Anschlusselements aus der Crashlage in die Normallage wird hierdurch besonders wirkungsvoll vorgebeugt. Aufgrund der Verwendung der Kolben-Zylinder-Einheit sowohl zur Verlagerung des Verriegelungsbolzens als auch zur Verlagerung der Rastspange, kann auf weitere Elemente zur Verlagerung der Rastspange, die nach einer besonders vorteilhaften Ausgestaltung der Erfindung in Richtung auf die Nicht-Eingriffsstellung vorgespannt ist, verzichtet werden.

Die Vorspannung in Richtung auf die Nicht-Eingriffsstellung gewährleistet dabei in besonderer Weise, dass es durch die Rastspange nicht zu Fehlfunktionen kommt. Die Rastspange erfüllt ihre Funktion nur im Falle einer Aktivierung des Gasgenerators aufgrund des sich dann aufbauenden Gasdrucks. Die Vorspannung in Richtung auf die Nicht-Eingriffsstellung ermöglicht es zudem, die Rastspange, ggf. nach einer Entriegelung, wieder in die Nicht-Eingriffsstellung zu verlagern, so dass eine Rückverlagerung des Anschlusselements gegenüber dem Grundkörper im Bedarfsfall in einfacher Weise erfolgen kann.

Zur Lagesicherung des Anschlusselements an dem Grundkörper in der Crashlage ist dabei nach einer besonders vorteilhaften Ausgestaltung vorgesehen, dass die Rastspange ein den Randbereich des Grundkörpers in der Sperrstellung umgreifendes Hakenelement aufweist. Das Hakenelement gewährleistet, dass in jedem Fall, auch im Falle einer vorteilhafterweise vorgesehenen Vorspannung der Rastspange in Richtung auf die Nicht-Eingriffsstellung, die Crashlage in zuverlässiger Weise durch die Rastspange arretiert ist. Eine Rückverlagerung kann nur dann erfolgen, wenn das Hakenelement der Rastspange mit dem Grundkörper derart außer Eingriff gebracht wird, dass dieses den Randbereich des Grundkörpers nicht mehr umgreift. Dies kann bspw. dadurch erfolgen, dass das Anschlusselement mit der Rastspange derart gegenüber dem Grundkörper verlagert wird, bis das Hakenelement mit dem Grundkörper außer Eingriff gelangt. Dann erfolgt im Falle der vorteilhafterweise vorgesehenen Vorspannung in die Nicht-Eingriffsstellung eine selbsttätige Rückverlagerung.

Nach einer weiteren Ausgestaltung der Erfindung kann die Rastspange zum Energieabbau durch Deformation ausgebildet sein. Für den Fall, dass neben einer Deformation der Haube ein zusätzlicher Energieabbau durch eine Rückverlagerung des Anschlusselements gegenüber dem Grundkörper erreicht werden soll, kann die Rastspange gemäß dieser Ausgestaltung der Erfindung entsprechend ausgebildet sein. Denkbare Ausgestaltungen sind bspw. Sicken oder eine wellenförmige Ausgestaltung der Rastspange, welche im Falle eines Lastaufbaus auf die Rastspange einer definierten Verformung unterliegen. Auch besteht die Möglichkeit, die vorteilhafterweise vorgesehenen Hakenelemente derart auszugestalten, dass sie durch eine definierte Verformung einen Energieaufbau erlauben.

Nach einer weiteren Ausgestaltung der Erfindung ist vorgesehen, dass das Gehäuse ein Dämpfungselement und/oder einen Endanschlag aufweist, das im Bereich um die Endlage des Schwenkhebels mit dem Schwenkhebel in Wirkverbindung gelangt. Ein Dämpfungselement, das im Bewegungsbereich des Schwenkhebels um dessen Endlage mit dem Schwenkhebel in Eingriff gelangt, erlaubt es, die Aufstellbewegung des Anschlusselements in die Crashlage zu dämpfen. Das Dämpfungselement kann dabei beliebig ausgebildet sein und verhindert ein Rückprallen des Anschlusselements gegenüber dem Grundkörper aufgrund eines möglicherweise ungedämpften Anschlags.

Ein Ausführungsbeispiel der Erfindung wird nachstehend mit Bezug auf die Zeichnungen erläutert. In den Zeichnungen zeigen:
- Fig. 1: eine perspektivische Ansicht eines Fronthaubenscharnierflügels mit einem Grundkörper und einem gegenüber dem Grundkörper verlagerbaren, als Klappenteil ausgebildetes Anschlusselement mit einer Antriebsvorrichtung;
- Fig. 2a: eine perspektivische Ansicht des Fronthaubenscharnierflügels von Fig. 1 ohne Antriebsvorrichtung;
- Fig. 2b: eine weitere perspektivische Ansicht des Fronthaubenscharnierflügels von Fig. 1 ohne Antriebsvorrichtung;
- Fig. 3: eine Vorderansicht des Fronthaubenscharnierflügels von Fig. 1;
- Fig. 4a: eine Ansicht eines Schnitts durch den Fronthaubenscharnierflügel von Fig. 1 entlang der Schnittlinie B-B von Fig. 3 in einer Normallage;
- Fig. 4b: eine Ansicht eines Schnitts durch den Fronthaubenscharnierflügel von Fig. 1 entlang der Schnittlinie B-B von Fig. 3 in einer Crashlage;
- Fig. 5a: eine Ansicht eines Schnitts des Fronthaubenscharnierflügels von Fig. 1 in einer nicht aktivierten Lage der Antriebsvorrichtung und
- Fig. 5b: eine Ansicht eines Schnitts des Fronthaubenscharnierflügels von Fig. 1 in einer aktivierten Lage der Antriebsvorrichtung.

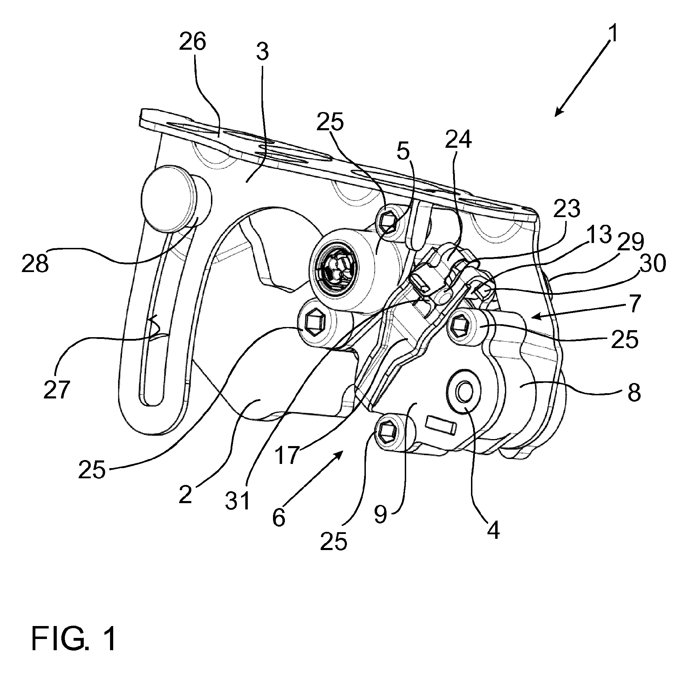

Ein Ausführungsbeispiel eines Fronthaubenscharnierflügels 1 eines hier nicht dargestellten Fronthaubenscharniers ist in Fig. 1 in einer perspektivischen Ansicht dargestellt. Der Fronthaubenscharnierflügel 1 weist dabei einen Grundkörper 2, der mit einem hier nicht dargestellten Fronthaubenscharnierunterteil eines Fronthaubenscharniers gelenkig verbindbar ist, und ein als Klappenteil 3 ausgebildetes Anschlusselement auf, welches über einen Scharnierstift 4 gelenkig mit dem Grundkörper 3 verbunden ist. Das Klappenteil 3 dient zur Anordnung des Fronthaubenscharniers an einer hier nicht dargestellten Fronthaube und weist hierzu einen mit Befestigungsöffnungen versehenen Flansch 26 auf.

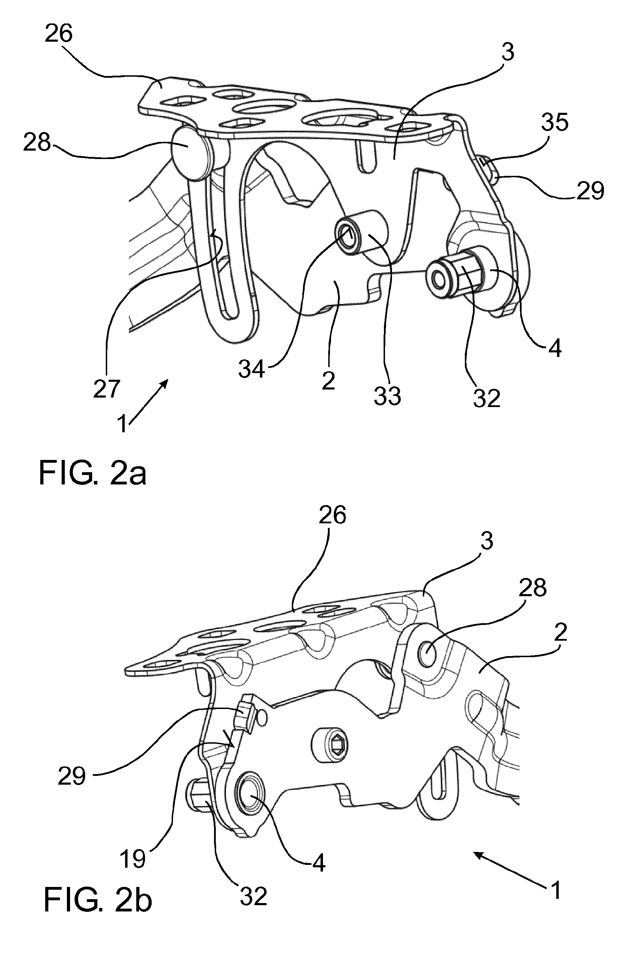

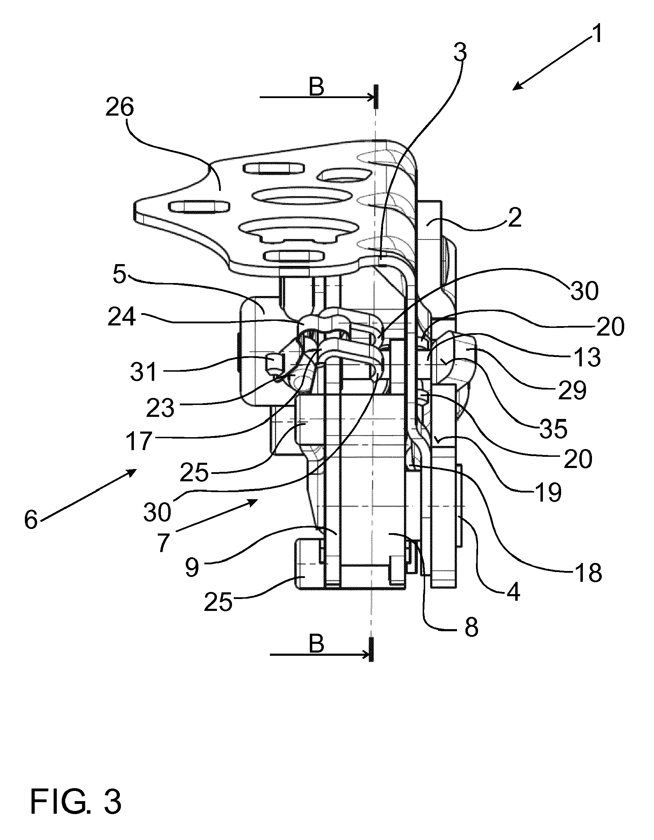

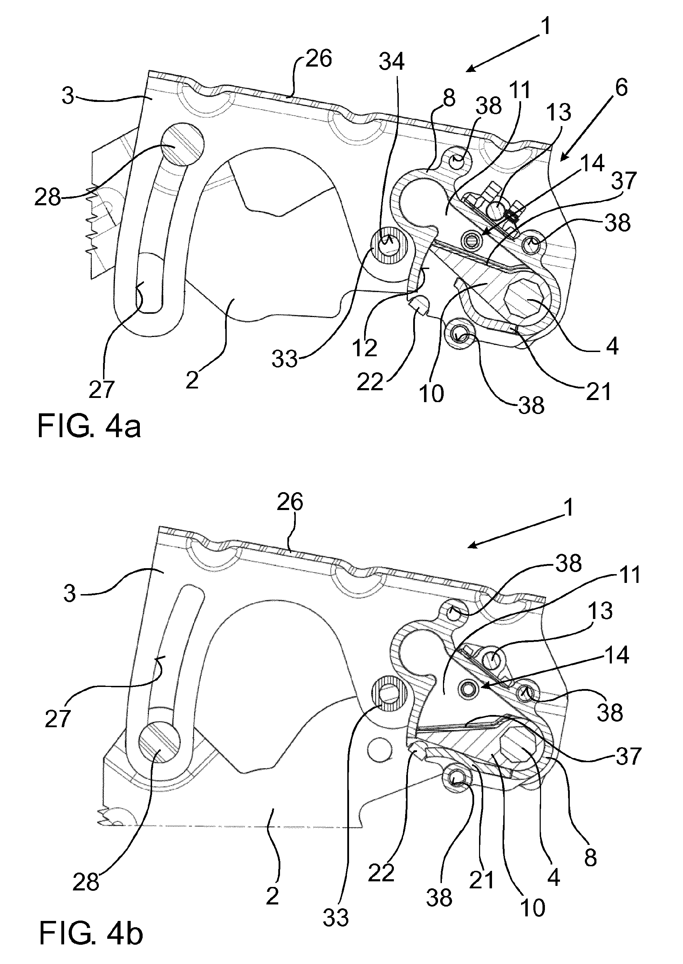

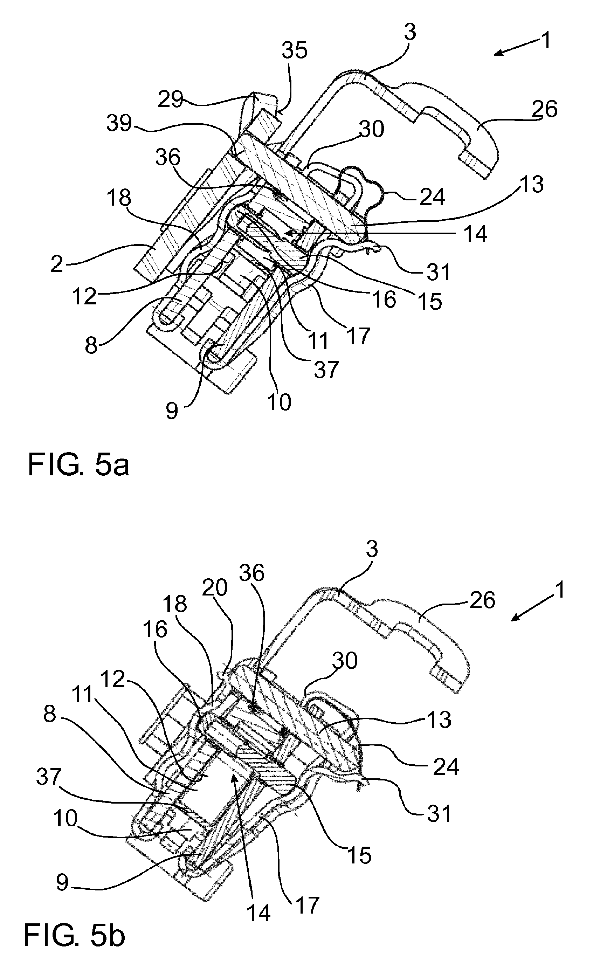

Der Scharnierstift 4 dient zur verschwenkbaren Lagerung des Klappenteils 3 gegenüber dem Grundkörper 2, so dass das Klappenteil 3 aus der in Fig. 1, Fig. 2a, Fig. 2b, Fig. 3, Fig. 4a und Fig. 5a dargestellten Normallage in die in Fig. 4b und Fig. 5b dargestellte Crashlage verstellbar ist. Bei einer Verstellung wird dabei das Klappenteil 3 um die Achse des Scharnierstifts 4 gegenüber dem Grundkörper 2 verschwenkt. Die Verschwenkbewegung des Klappenteils 3 gegenüber dem Grundkörper 2 ist dabei über eine Kulissenführung begrenzt, die durch eine Kulisse 27 an dem Klappenteil 3 und einen die Kulisse 27 durchgreifenden, an dem Grundkörper 2 befestigten Führungsbolzen 28 gebildet ist. In der Normallage liegt der Führungsbolzen 28 an dem dem Flansch 26 zugewandten Ende der Kulisse 27 an. In der Crashlage liegt der Führungsbolzen 28 an dem dem Flansch 26 gegenüberliegenden Ende der Kulisse 27 an.

Zur Verlagerung des Klappenteils 3 aus der Normallage in die Crashlage weist der Fronthaubenscharnierflügel 1 eine Antriebsvorrichtung 6 mit einem an einem Gehäuse 7 der Antriebsvorrichtung 6 angeordneten pyrotechnischen Gasgenerator 5 auf. Zur Verbindung des Gehäuses 7 der Antriebsvorrichtung 6 mit dem Klappenteil 3 ist ein Gehäusegrundkörper 8 des Gehäuses 7 auf einem Lagerzapfen 33 des Klappenteils 3 positioniert und dort mittels einer in ein Innengewinde 34 des Lagerzapfens 33 eingeschraubten Befestigungsschraube 25 in seiner Position an dem Klappenteil 3 fixiert. Die in den Lagerzapfen 33 eingeschraubte Befestigungsschraube 25 dient auch, wie drei weitere Befestigungsschrauben 25, die in Schraubenaufnahmen 38 an dem Gehäusegrundkörper 8 einschraubbar sind, zur Befestigung eines Gehäusedeckels 9 auf dem Gehäusegrundkörper 8.

Das Gehäuse 7 der Antriebsvorrichtung 6 weist ferner einen Druckraum 11 auf, welcher mit dem Gasgenerator 5 derart verbunden ist, dass eine Aktivierung des Gasgenerators 5 eine Druckerhöhung innerhalb des Druckraums 11 bewirkt. Innerhalb des Druckraums 11 ist ein Schwenkhebel 10 gegenüber dem Gehäuse 7 verstellbar angeordnet, wobei der Schwenkhebel 10 über einen polygonalen Verbindungsabschnitt 32 des Scharnierstifts 4 verdrehfest auf dem Scharnierstift 4 befestigt ist. An der Innenwand 12 des Gehäuses 7 liegt der Schwenkhebel 10 über eine Dichtauflage 37 abdichtend an, so dass gewährleistet ist, dass im Falle einer Aktivierung des Gasgenerators 5 die sich im Druckraum 11 einstellende Druckerhöhung zu einer Verlagerung des Schwenkhebels 10 gegenüber dem Gehäuse 7 führt.

Die Schwenkbewegung des Schwenkhebels 10 gegenüber dem Gehäuse 7 ist dabei durch einen Endanschlag 22 begrenzt. Ferner dient ein an der dem Druckraum 11 gegenüberliegenden Seite des Schwenkhebels 10 anliegendes Dämpfungselement 21 dazu, dass die Verstellbewegung des Schwenkhebels 10 zu dämpfen (vgl. Fig. 4a, Fig. 4b).

Zur Lagesicherung des Klappenteils 3 an dem Grundkörper 2 in der Normallage weist die Antriebsvorrichtung 6 ferner einen Verriegelungsbolzen 13 auf, welcher in seiner Arretierungsstellung in eine Öffnung 39 des Grundkörpers 2 eingreift und so eine Verlagerung des Klappenteils 3 gegenüber dem Grundkörper 2 blockiert. Der Verriegelungsbolzen 13 ist dabei mittels eines Federbügels 24 in Richtung auf die Arretierungsstellung vorgespannt. Der Federbügel 24 ist dabei ebenso wie der Verriegelungsbolzen 13 derart an einer an dem Gehäusedeckel 9 anliegenden Entriegelungsspange 17 befestigt, dass eine Verlagerung der Entriegelungsspange 17 eine Verstellung des Verriegelungsbolzens 13 sowie der Federspange 24 bewirkt. Zur Verbindung mit der Entriegelungsspange 17 weist hierzu der Verriegelungsbolzen 13 einen sich senkrecht zur Längsachse des Verriegelungsbolzens 13 erstreckenden Steg 23 auf, welcher an einer dem Gehäusedeckel 9 gegenüberliegenden Seite der Entriegelungsspange 17 anliegt. Ein aus der Entriegelungsspange 17 herausgebogener Flansch 31 liegt an dem Steg 23 an und sichert so die Position des Verriegelungsbolzens 13 an der Entriegelungsspange 17. Der Flansch 31 dient ferner zur Festlegung der Federspange 24.

Zur Verlagerung des Verriegelungsbolzens 13 weist die Antriebsvorrichtung 6 ein Betätigungselement 14 auf. Das Betätigungselement 14 ist dabei durch eine Kolben-Zylinder-Einheit gebildet. Diese weist einen Zylinder 16 und einen beweglich innerhalb des Zylinders 16 verlagerbaren Kolben 15 auf. Der Kolben 15 liegt an der dem Gehäusedeckel 9 zugewandten Seite der Entriegelungsspange 17 und der Zylinder 16 an einer dem Gehäusegrundkörper 8 zugewandten Seite einer Rastspange 18 an. Eine Aktivierung des Gasgenerators 5 der Antriebsvorrichtung 6 bewirkt eine Druckerhöhung innerhalb des Hohlraums zwischen dem Zylinder 16 und dem Kolben 15, so dass diese relativ zueinander verlagert werden. Aufgrund der Anlage des Zylinders 16 an der Rastspange 18 und des Kolbens 15 an der Entriegelungsspange 17 erfolgt dann ein Abheben der Entriegelungsspange 17 von dem Gehäusedeckel 9 sowie eine Verlagerung der Rastspange 18 in Richtung auf den Grundkörper 2.

Durch die Verlagerung der Entriegelungsspange 17 wird der Verriegelungsbolzen 13 aus der Öffnung 39 des Grundkörpers 2 herausgezogen, so dass das Klappenteil 3 gegenüber dem Grundkörper 2 um den Scharnierstift 4 verschwenkt werden kann. An der Entriegelungsspange 17 befindliche Hakenelemente 20 begrenzen die Bewegung der Entriegelungsspange 17, wobei diese in der Freigabestellung des Verriegelungsbolzens 13 an der dem Gehäusegrundkörper 8 zugewandten Seite des Gehäusedeckels 9 anliegen.

Die Rastspange 18 dient in der Crashlage zur Arretierung des Klappenteils 3 gegenüber dem Grundkörper 2. Die Rastspange 18 weist hierzu ein Hakenelement 20 auf, welches aufgrund der durch den Zylinder 16 bewirkten Verlagerung in der Crashlage einen Randbereich 19 des Grundkörpers 2 umgreift, so dass eine Rückverlagerung des Klappenteils 3 gegenüber dem Grundkörper 2 durch die Rastspange 18 blockiert ist. Um im Bedarfsfall eine Rückverlagerung des Klappenteils 3 gegenüber dem Grundkörper 2 zu erreichen, muss das Hakenelement 20 mit dem Grundkörper 2 außer Eingriff gebracht werden. Hierzu kann bspw. das Klappenteil 3 angehoben werden, so dass das Hakenelement 20 mit dem Randbereich 19 des Grundkörpers 2 außer Eingriff kommt und in die Ausgangslage in Richtung auf den Gehäusegrundkörper 2 zurückverlagerbar ist. Eine solche Rückverlagerung wird dabei im Falle eines Anhebens des Klappenteils 3 durch eine Feder 36 bewirkt, die die Rastspange 20 in Richtung auf den Gehäusegrundkörper 8 vorspannt.

Der in der druckentlasteten Lage in Richtung auf den Grundkörper 2 vorstehende Verriegelungsbolzen 13 gelangt bei einer Rückverlagerung des Klappenteils 3 mit einem Einlaufelement 29 des Grundkörpers 2 in Kontakt, wobei das Einlaufelement 29 eine Einlaufschräge 35 aufweist, die den Verriegelungsbolzen 13 in Richtung auf die Entriegelungsspange 17 rückverlagert, bis der Verriegelungsbolzen 13 in der Normallage durch die Federspange 24 in die Öffnung 39 gelangt und dort das Klappenteil 3 an dem Grundkörper 2 arretiert.

Nach einer Aktivierung des Gasgenerators 5 ist ein einfacher Austausch der Antriebsvorrichtung 6 möglich, wobei hierzu die Antriebsvorrichtung 6 von dem Lagerzapfen 26 und der Schwenkhebel 10 von dem Verbindungsabschnitt 32 des Scharnierstifts 4 abgezogen werden muss.

**Bezugszeichenliste**

| | | | |
|---|---|---|---|
| 1 | Fronthaubenscharnierflügel | 21 | Dämpfungselement |
| 2 | Grundkörper | 22 | Endanschlag |
| 3 | Anschlusselement | 23 | Steg |
| 4 | Scharnierstift | 24 | Feder (Verriegelungsbolzen) |
| 5 | Gasgenerator | 25 | Schrauben |
| 6 | Antriebsvorrichtung | 26 | Flansch |
| 7 | Gehäuse | 27 | Kulisse |
| 8 | Gehäusegrundkörper | 28 | Führungsbolzen |
| 9 | Gehäusedeckel | 29 | Einlaufelement |
| 10 | Antriebskörper / Schwenkhebel | 30 | Anschlagelement (Entriegelungsspange) |
| 11 | Druckraum | | |
| 12 | Gehäuseinnenwand | 31 | Flansch |
| 13 | Arretierungselement / Verriegelungsbolzen | 32 | Verbindungsabschnitt (Entriegelungsspange) |
| 14 | Betätigungselement | 33 | Lagerzapfen |
| 15 | Kolben | 34 | Innengewinde |
| 16 | Zylinder | 35 | Einlaufschräge |
| 17 | Entriegelungsspange | 36 | Feder (Rastspange) |
| 18 | Rastspange | 37 | Dichtauflage |
| 19 | Randbereich Grundkörper | 38 | Schraubenaufnahmen |
| 20 | Hakenelement | 39 | Öffnung |

## Patentansprüche

1. Fronthaubenscharnierflügel für ein Fahrzeugfronthaubenscharnier, mit
- einem gelenkig mit einem Unterteil des Fahrzeugfronthaubenscharniers verbundenen Grundkörper (2),
- einem mit einer Fronthaube oder einer Fahrzeugkarosserie verbindbaren und gegenüber dem Grundkörper (2) zwischen einer Normallage und einer Crashlage verschwenkbaren Anschlusselement (3),
- einem das Anschlusselement (3) und den Grundkörper (2) gelenkig verbindenden Scharnierstift (4) und
- einer einen pyrotechnischen Gasgenerator (5) aufweisenden Antriebsvorrichtung (6), die derart ausgebildet und angeordnet ist, dass eine Aktivierung des Gasgenerators (5) eine Verlagerung des Anschlusselements (3) aus der Normallage in die Crashlage bewirkt,
**dadurch gekennzeichnet, dass** der Gasgenerator (5) ortsfest an einem mit dem Anschlusselement (3) verbundenen Gehäuse (7) befestigt ist und derart mit einem verdrehfest an dem Scharnierstift (4) angeordneten Antriebskörper (10) der Antriebsvorrichtung (6) in Wirkverbindung befindlich ist, dass der bei einer Aktivierung des Gasgenerators (5) auftretende Gasdruck eine Verlagerung des Gehäuses (7) relativ zum Antriebskörper (10) bewirkt.

2. Fronthaubenscharnierflügel nach Anspruch 1, **dadurch gekennzeichnet, dass** der Antriebskörper durch einen Schwenkhebel (10) gebildet ist, der im Bereich eines Druckraums (11) des Gehäuses (7) abdichtend an einer Gehäuseinnenwand (12) anliegt, wobei der Schwenkhebel (10) relativ gegenüber dem Gehäuse (7) zwischen einer Ausgangslage und einer Endlage verstellbar ist.

3. Fronthaubenscharnierflügel nach Anspruch 1 oder 2, **dadurch gekennzeichnet, dass** die Antriebsvorrichtung (6) ein in der Normallage das Anschlusselement (3) an dem Grundkörper (2) festlegendes, zwischen einer Arretierungsstellung und einer Freigabestellung verlagerbares Arretierungselement (13) aufweist.

4. Fronthaubenscharnierflügel nach einem der vorhergehenden Ansprüche, **dadurch gekennzeichnet, dass** das Arretierungselement (13) in Richtung auf die Arretierungsstellung vorgespannt ist.

5. Fronthaubenscharnierflügel nach einem der vorhergehenden Ansprüche, **dadurch gekennzeichnet, dass** das Arretierungselement durch einen verschieblich am Gehäuse (7) der Antriebsvorrichtung (6) gelagerten, in der Normallage in den Grundkörper (2) eingreifenden Verriegelungsbolzen (13) gebildet ist.

6. Fronthaubenscharnierflügel nach einem der vorhergehenden Ansprüche, **dadurch gekennzeichnet, dass** die Antriebsvorrichtung (6) ein Betätigungselement (14) zur Verlagerung des Arretierungselements (13) in die Freigabestellung aufweist, wobei das Betätigungselement (14) derart ausgebildet ist, dass der bei einer Aktivierung des Gasgenerators (5) auftretende Gasdruck eine das Arretierungselement (13) in die Freigabestellung bewegende Verstellung des Betätigungselements (14) bewirkt.

7. Fronthaubenscharnierflügel nach einem der vorhergehenden Ansprüche, **dadurch gekennzeichnet, dass** das Betätigungselement (14) eine Kolben-Zylinder-Einheit aufweist, die derart ausgebildet und mit dem Arretierungselement (13) in Wirkverbindung befindlich ist, dass der bei einer Aktivierung des Gasgenerators (5) auftretende Gasdruck eine Verlagerung des Kolbens (15) relativ gegenüber dem Zylinder (16) und damit eine Verlagerung des Arretierungselements (13) in die Freigabestellung bewirkt.

8. Fronthaubenscharnierflügel nach einem der vorhergehenden Ansprüche, **dadurch gekennzeichnet, dass** die Kolben-Zylinder-Einheit (15, 16) einenends an einer mit dem Verriegelungsbolzen (13) verbundenen Entriegelungsspange (17) und anderenends an einer Rastspange (18) anliegt, die zwischen einer Nichteingriffsstellung und einer das Anschlusselement (3) in der Crashlage an dem Grundkörper (2) festlegende Sperrstellung verstellbar ist.

9. Fronthaubenscharnierflügel nach einem der vorhergehenden Ansprüche, **dadurch gekennzeichnet, dass** die Rastspange (18) in Richtung auf die Nichteingriffsstellung vorgespannt ist.

10. Fronthaubenscharnierflügel nach einem der vorhergehenden Ansprüche, **dadurch gekennzeichnet, dass** die Rastspange (18) ein einen Randbereich (19) des Grundköpers in der Sperrstellung umgreifendes Hakenelement (20) aufweist.

11. Fronthaubenscharnierflügel nach einem der vorhergehenden Ansprüche, **dadurch gekennzeichnet, dass** die Rastspange (18) zum Energieabbau durch Deformation ausgebildet ist.

12. Fronthaubenscharnierflügel nach einem der vorhergehenden Ansprüche, **dadurch gekennzeichnet, dass** das Gehäuse (7) ein Dämpfungselement (21) und/ oder einen Endanschlag (22) aufweist, das im Bereich um die Endlage des Schwenkhebels (18) mit dem Schwenkhebel (18) in Wirkverbindung gelangt.
